# EUROPÄISCHE PATENTSCHRIFT

(11) **EP 0 986 493 B1**
(45) Veröffentlichungstag und Bekanntmachung des Hinweises auf die Patenterteilung: **29.08.2001**
(21) Anmeldenummer: 98934835.4
(22) Anmeldetag: 26.05.1998
(51) Int. Cl.: B60R 21/18, B60R 22/14, B60R 22/28

(54) **AIRBAGSYSTEM**
AIRBAG SYSTEM
SYSTEME D'AIRBAG

(30) Priorität: 02.06.1997 DE 19724191
(43) Veröffentlichungstag der Anmeldung: 22.03.2000
(73) Patentinhaber: Petri AG, 63743 Aschaffenburg (DE)
(72) Erfinder: ADOMEIT, Heinz-Dieter, D-10623 Berlin (DE)
(74) Vertreter: Bärmann, Klaus, Dipl.-Ing.
(86) Internationale Anmeldenummer: DE9801485
(87) Internationale Veröffentlichungsnummer: WO9855344

(56) Entgegenhaltungen:
- WO-A-97/06983
- DE-A- 19 726 782
- US-A- 5 161 821
- US-A- 5 333 902
- US-A- 5 462 308
- US-A- 5 588 672

## Beschreibung

Die Erfindung betrifft ein Airbagsystem nach dem Oberbegriff des Anspruchs 1 (siehe z.B. US-A-5 588 672).

Airbag-Rückhaltesysteme im Bereich des Beckens oder Oberkörpers des Insassen sind bekannt. Bei diesen bekannten Systemen sind Airbags auf einem Gurt aufgesetzt oder der Sicherheitsgurt ist als Airbag ausgebildet.

So ist aus der DE 43 06 528 A1 ein Airbag für Sicherheitsgurte bekannt, bei dem eine Airbagtasche auf den vorhandenen Gurt aufgebracht und mit einer Druckluftleitung sowie mit einem Druckluftgeber und - auslöser verbunden wird.

Weiterhin ist aus der DE 42 32 041 A1 eine aufblasbare Sicherheitsgurteinheit bekannt, bei der mindestens ein Teil eines Abschnitts, der mit einem Insassen in einem Fahrzeug in Kontakt steht, in einer sackartigen Form ausgebildet ist. Dabei behält der sackartige Abschnitt im inaktivierten Zustand eine bandartige Form bei und im Crashfall wird er durch Gas aufgeblasen und entfaltet. Bei dieser Sicherheitsgurteinheit ist also der Sicherheitsgurt abschnittsweise selbst als Airbag ausgebildet.

Der Vorteil dieser Gurtairbags besteht darin, daß sie im Gegensatz zu Airbags, die am Lenkrad oder an vor dem Insassen befindlichen Teilen der Fahrzeugkarosserie untergebracht sind, unmittelbar am Insassen angebracht sind, d.h., sie befinden sich bereits in dem Bereich, in dem sie ihre Schutzwirkung ausüben sollen.

Der Nachteil dieser Gurtairbags besteht darin, daß das Airbaggewebe beim Anlegen und Ablegen des Gurtes bewegt wird und dabei Wechselbelastungen ausgesetzt ist. Dadurch besteht die Gefahr, daß das Gewebe verschleißt, ohne daß der Gassack entfaltet wurde.

Aus der o.g. US-A-5 588 672 und aus der US-A-5 462 308 sind Seitenairbagsysteme bekannt, bei denen eine feste Führungsbahn vorgesehen ist. Der Gassack entfaltet sich im Crashfall entlang dieser Führungsbahn. Diese Anordnung ist ausschließlich für Seitenairbagsysteme verwendbar.

Der Erfindung liegt deshalb die Aufgabe zugrunde, bei einem Airbagsystem, das auch im Zusammenhang mit einem Sicherheitsgurt verwendbar ist, das Bewegen des Gassacks im inaktivierten Zustand weitestgehend zu vermeiden.

Erfindungsgemäß wird das gemäß den kennzeichnenden Merkmalen des Anspruchs 1 erreicht.

Bei einem Airbagsystem mit Gassack und Gasgenerator ist erfindungsgemäß mindestens eine flexible an einem Ende fest mit dem Kraftfahrzeug verbundene und am anderen Ende lösbar mit dem Kraftfahrzeug verbindbare Führungsbahn vorgesehen, wobei der Gassack im inaktivierten Zustand am fest verbundenen Ende der Führungsbahn gelagert ist, und wobei der Gassack nach Zündung des Gasgenerators unter dem Einfluß der in den Gassack eintretenden Gase entlang der Führungsbahn in Richtung des anderen, lösbaren Endes bewegbar ist.

Der Vorteil dieses Airbagsystems besteht darin, daß der am fest mit dem Kraftfahrzeug verbundenen Ende. der flexiblen Führungsbahn vorgesehene Gassack beim Lösen und Fixieren des anderen Endes der Führungsbahn nicht oder kaum bewegt wird, und daß das Gassackmaterial keinen Wechselbelastungen ausgesetzt ist. Der Gassack befindet sich bei diesem erfindungsgemäßen Airbagsystem im inaktivierten Zustand außerhalb der für den Schutz des Insassen erforderlichen Position. Erst nach Zündung des Gasgenerators wird er in die für den Schutz des Insassen erforderliche Position gebracht.

In einer Ausführungsform ist mindestens ein an der Führungsbahn zwangsgeführtes Führungselement am Gassack vorgesehen. Es ist zweckmäßig, daß als Führungselement mindestens eine Lasche oder ein Ring verwendet wird, wobei bei Verwendung mehrerer Führungselemente diese im Abstand zueinander angeordnet sind. Bei dieser Ausführungsform umgreifen die Führungselemente die Führungsbahn. Die Führungselemente bewirken, daß sich der Gassack nach Zündung des Gasgenerators zwangsgeführt zum anderen Ende der Führungsbahn bewegt.

Es ist zweckmäßig, daß der Gassack einen schlauchförmigen Gaseinlaß aufweist, dessen Länge so bemessen ist, daß er im voll entfalteten Zustand des Gassackes bei maximal ausgezogenem Gurt vollkommen gestreckt ist und bei weniger ausgezogenem Gurt eine Lose bildet. Infolge dieser unterschiedlichen Streckung des Gaseinlasses in Abhängigkeit von der Konstitution des Insassen zentriert sich der Gassack bei seiner Entfaltung unabhängig von der der Auszugslänge des Gurtes und damit der Führungsbahn auf dieser selbsttätig.

In einer weiteren Ausgestaltung ist vorgesehen, daß der Gassack eine in dessen aufgeblasenen Zustand im wesentlichen parallel zur Führungsbahn verlaufende gesonderte Kammer aufweist, die sich von der Gasgeneratorseite aus über nahezu die gesamte Gassackbreite erstreckt. Dabei ist es zweckmäßig, daß die Kammer durch eine Reißnaht oder durch eine eingenähte Zwischenwand vom übrigen Bereich des Gassacks abgeteilt ist. Der Gassack wird dann zunächst in der gesonderten Kammer aufgeblasen, wodurch der Gassack vor dem vollständigen Aufblasen in die für den Schutz des Insassen erforderliche Position gebracht wird. Das Gas tritt anschließend in den übrigen Bereich des Gassacks durch mindestens einen vorhandenen oder sich durch Aufreißen bildenden Durchlaß ein und/oder nach dem Aufreißen der Reißnähte tritt das Gas wegen des nunmehr einheitlichen Gassackinnenraumes über die gesamte Breite in den übrigen Bereich ein.

Die Führungsbahn kann sich in unterschiedlicher Weise im Bereich des Insassen erstrecken. So kann sie sich vor dem Insassen von einer zur anderen Sitzseite erstrecken, wobei der Gasgenerator seitlich des Sitzes oder hinter diesem angeordnet ist und wobei der Gassack im inaktiviertem Zustand seitlich des Sitzes angeordnet ist und nach Zündung des Gasgenerators in Richtung der anderen Seite des Sitzes bewegbar ist. Als Führungsbahn ist bei dieser Anordnung vorzugsweise ein Gurt vorgesehen, der sowohl als straff am Insassen anliegender Sicherheitsgurt als auch als lose am Insassen anliegender Gurt ausgebildet sein kann.

In einer bevorzugten Ausführungsform ist als Führungsbahn der im Beckenbereich verlaufende Abschnitt eines 3-Punkt-Automatikgurtes vorgesehen.

In einer weiteren Ausgestaltung ist der im Beckenbereich verlaufende Gurt oder Gurtabschnitt zweilagig ausgeführt, wobei nur die zweite, an der ersten Lage befestigte Lage als Führungsbahn für den sich entfaltenden Gassack vorgesehen ist. Die Länge der Führungsbahn ist zwischen deren beiden Anbindungspunkten an der ersten Lage so bemessen, daß sich ein vorbestimmter Abstand zwischen dem eng am Insassen anliegenden Beckengurt bzw. Beckengurtabschnitt eines 3-Punkt-Automatikgurtes und der Führungsbahn bei der Entfaltung des Gassacks einstellen kann.

Die zweilagige Ausführung ist nicht nur im Beckenbereich sondern auch im Schulterbereich einsetzbar.

Der Gurt kann wie ein üblicher Sicherheitsgurt angelegt werden und bei Nichtgebrauch an der Seite des Fahrzeugs mit seinem lösbaren Ende eingehängt werden.

In einer Ausgestaltung ist vorgesehen, daß der Gurt von der Seite, an der der Gassack mit dem Gasgenerator angeordnet ist, aus einem Gurtautomaten heraus zur gegenüberliegenden Seite des Insassen verläuft, dort in einer mit einem Gurtschloß versehenen Führung beweglich geführt und umgelenkt wird und zur anderen Seite zu einer Gurtbefestigung im Bereich des Gasgenerators zurück verläuft.

Um mit Sicherheit ein Rücklaufen des sich entspannenden Gassacks zu vermeiden, ist es zweckmäßig, daß am Gassack eine mit der Führungsbahn zusammenwirkende Rücklaufsperre vorgesehen ist. Diese weist in einer Ausführungsform zwei in einer Führung beweglich gelagerte zylindrische Sperrglieder auf, die sich auf unterschiedlichen Seiten der Führungsbahn gegenüberliegen.

In einer weiteren Ausführungsform ist vorgesehen, das erfindungsgemäße Airbagsystem auch für einen Seitenairbag anzuwenden. In diesem Fall erstreckt sich die Führungsbahn seitlich hinter dem Insassen vom Fußraum zum Kopfraum. Der Gasgenerator und der inaktivierte Gassack sind dann vorzugsweise im Fußraum angeordnet. Vorzugsweise ist als Führungsbahn der zwischen dem Gurtautomat und der oberen Umlenkung verlaufende Abschnitt eines 3-Punkt-Automatikgurtes vorgesehen.

Das erfindungsgemäße Airbagsystem ist nicht nur in Personenkraftwagen, sondern bei allen anderen Kraftfahrzeugen verwendbar.

Die Erfindung soll in Ausführungsbeispielen anhand von Zeichnungen erläutert werden. Es zeigen:
- Fig. 1: eine Draufsicht auf eine Führungsbahn, die durch den im Bereich des Beckens verlaufenden Abschnitt eines 3-Punkt-Automatikgurtes gebildet wird, mit einem Ring als Führungselement und inaktiviertem Gassack;
- Fig.2: die Ausführungsform nach Fig. 1 in der Seitenansicht;
- Fig. 3: die Draufsicht nach Fig. 1 mit entfaltetem Gassack;
- Fig. 4: die Seitenansicht nach Fig. 2 mit entfaltetem Gassack;
- Fig. 5: eine Draufsicht auf einen 3-Punkt-Automatikgurt mit zweilagigem Gurtabschnitt im Beckenbereich;
- Fig. 6: eine Draufsicht auf eine Beckengurtanordnung mit mehreren ringförmigen Führungselementen und inaktiviertem Gassack;
- Fig. 7: die Draufsicht nach Fig. 6 mit entfaltetem Gassack;
- Fig. 8: die Teilansicht eines Gassacks mit aufgenähter durchgehender Lasche;
- Fig. 9: die Teilansicht eines Gassacks mit aufgenähten einzelnen Laschen;
- Fig. 10: einen Schnitt durch den Gassack nach den Figuren 8 und 9;
- Fig. 11: eine Teilansicht eines Gassacks mit am unteren Rand angenähten einzelnen Laschen;
- Fig. 12: einen Schnitt durch den Gassack nach Fig. 11;
- Fig. 13: einen Schnitt durch eine Ausführungsform mit einseitig am unteren Rand angenähten einzelnen Laschen;
- Fig. 14: eine Teilansicht eines Gassacks mit Ringen als Führungselementen;
- Fig. 15: einen Schnitt durch den Gassack nach Fig. 14;
- Fig. 16: eine Teilansicht eines Gassackes mit abgenähter durchgehender Lasche;
- Fig. 17: einen Schnitt durch den Gassack nach Fig. 16;
- Fig. 18: einen Draufsicht auf einen Gassack mit einer gesonderten Kammer;
- Fig. 19: einen Schnitt durch eine weitere Ausführungsform des Gassacks mit einer gesonderten Kammer;
- Fig. 20: einen Ausschnitt aus einem Gassack mit Rücklaufsperre;
- Fig. 21: die Seitenansicht eines 3-Punkt-Automatikgurtes mit einem Seitenairbag.

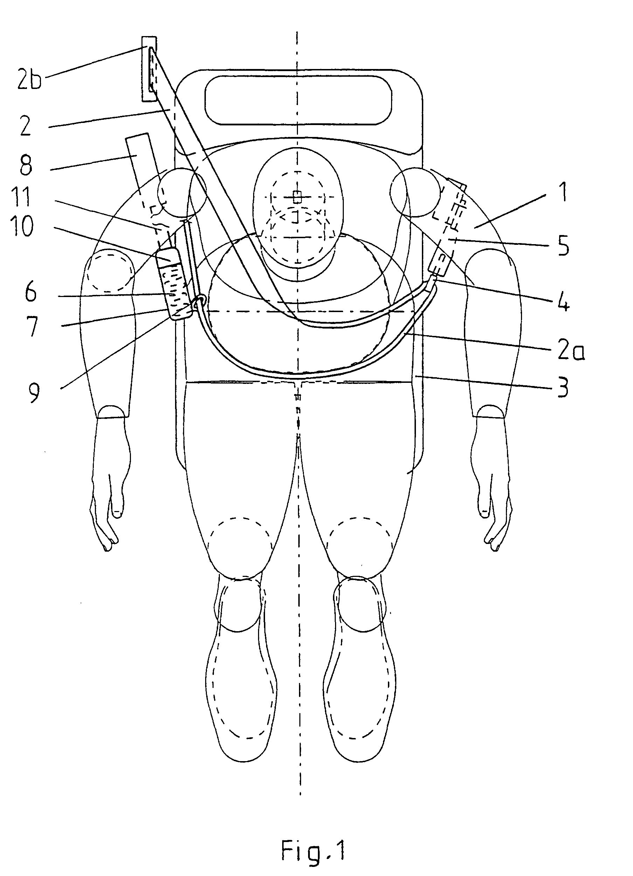

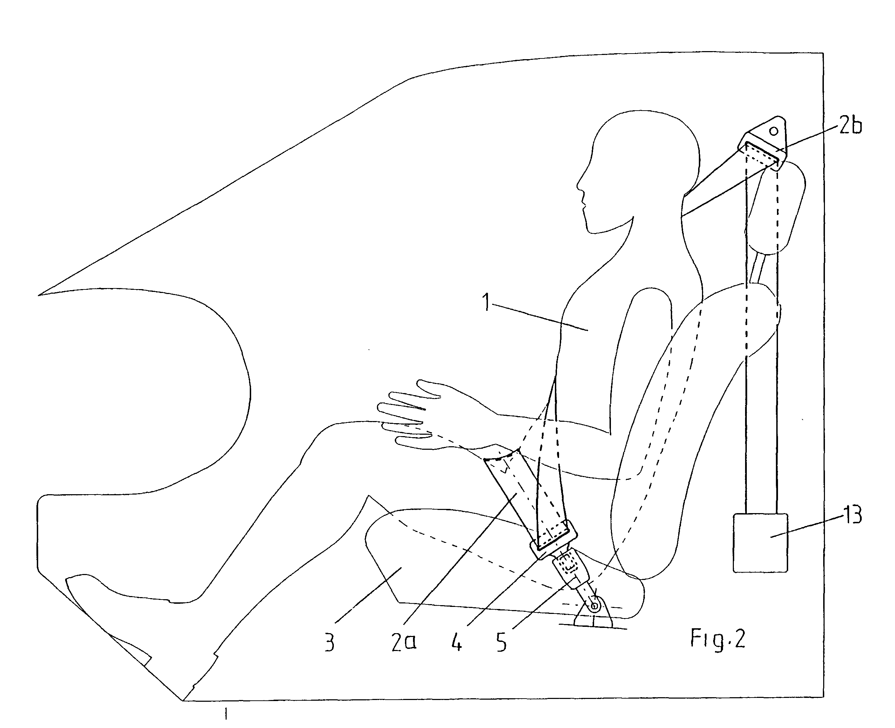

In den Figuren 1 und 2 ist ein Insasse 1 durch einen 3-Punkt-Automatikgurt 2 gesichert. Der im Beckenbereich verlaufende Gurtabschnitt 2a verläuft als Führungsbahn von einer Seite des Sitzes 3 zur anderen. Der Automatikgurt 2 ist auf der in der Draufsicht linken Seite fest mit dem Kraftfahrzeug verbunden, verläuft über den Beckenbereich zur gegenüberliegenden Seite. Dort wird er an einer Verriegelungseinheit 4 umgelenkt und über die Schulter des Insasen sowie über eine obere Umlenkung 2b zu einem Gurtautomaten 13 geführt. Mittels der Verriegelungseinheit 4 ist der Automatikgurt in einem Gurtschloß 5 lösbar mit dem Kraftfahrzeug verbunden.

Auf der dargestellten linken, fest verbundenen Seite des Gurtes 2 ist seitlich vom Insassen ein Gassack 6 in gefaltetem Zustand innerhalb einer aufreißbaren Hülle 7 angeordnet. Der Gassack ist mit seinem hinteren Ende mittels einer Halterung 10 mit dem Kraftfahrzeug verbunden. Dem Gassack ist ein Gasgenerator 8 zugeordnet. Beide sind über eine Zuleitung 11 miteinander verbunden. Am vorderen Ende des Gassacks ist ein Ring 9 befestigt, der den Gurtabschnitt 2a als Führungsbahn umgreift. Es ist erkennbar, daß der Gassack beim Ablegen des Gurtes durch den Insassen nicht oder kaum bewegt werden muß, so daß der gefaltete Gassack keinen wechselnden Beanspruchungen ausgesetzt wird.

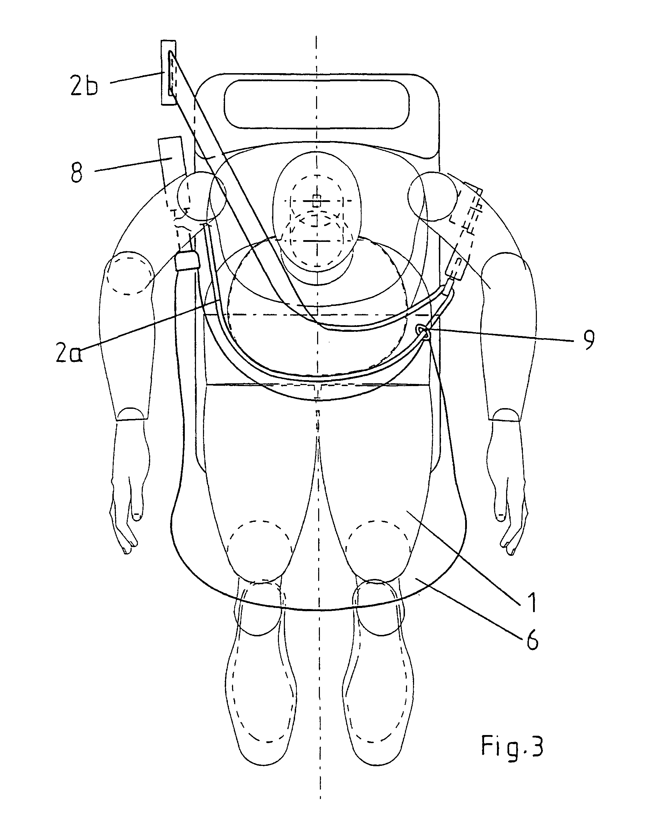

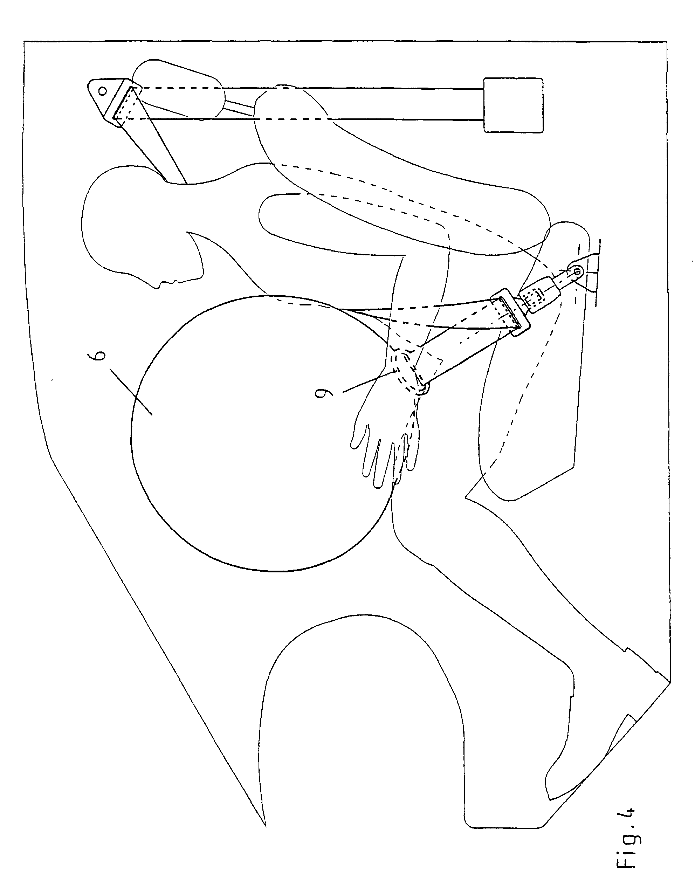

Nach der Zündung des Gasgenerators 8 wird das vordere Ende des Gassacks mit dem Ring 9 durch den sich entfaltenden Gassack entlang des Gurtabschnitte 2a als Führungsbahn von seiner Ruhestellung auf der einen Seite des Sitzes zur anderen Seite des Sitzes bewegt, so daß sich der Gassack nach der vollen Entfaltung, wie es in den Figuren 3 und 4 dargestellt ist, in der für den Schutz des Insassen erforderlichen Position befindet.

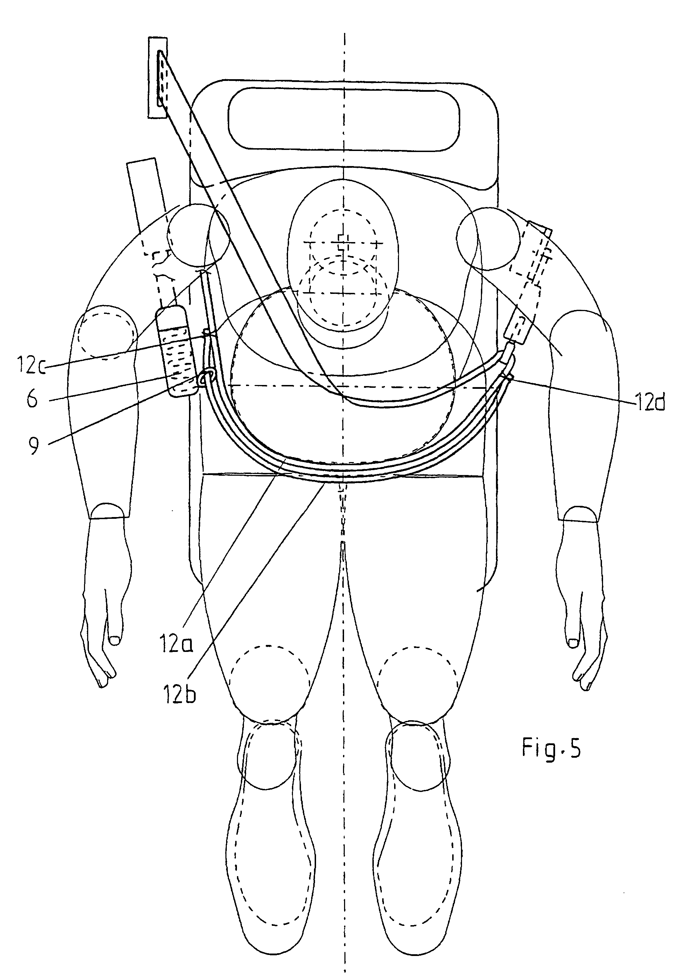

Beim Ausführungsbeispiel der Figur 5 ist ein 3-Punkt-Automatikgurt vorgesehen, wobei der im Beckenbereich verlaufende Gurtabschnitt zweilagig ausgeführt ist. Dabei stellt die erste Lage 12a einen Abschnitt des 3-Punkt-Automatikgurtes dar und die zweite Lage 12b ist eine gesonderte Lage, die an Anbindungspunkten 12c, 12d mit der Lage 12a verbunden ist. Es ist erkennbar , daß zwischen beiden Lagen ein Zwischenraum besteht, so daß der Ring 9 bei der Entfaltung des Gassackes besonders leicht beweglich ist.

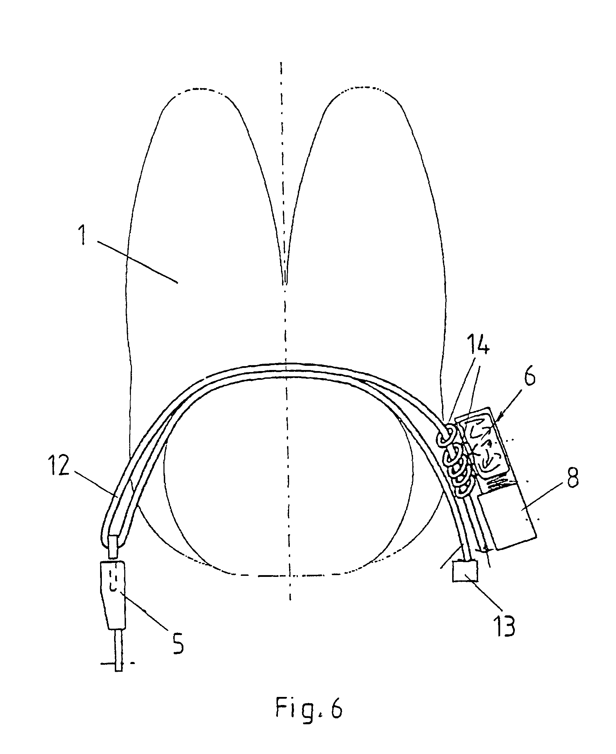

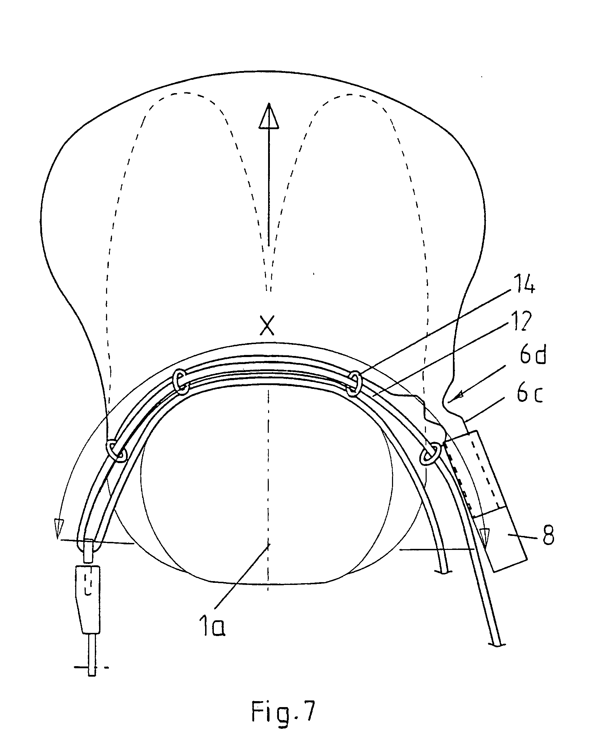

Beim Ausführungsbeipiel der Figuren 6 und 7 ist ein zweilagiger Gurt 12 vorgesehen. Er verläuft ausgehend von einem Gurtautomaten 13 von einer Seite des Insassen zur anderen Seite. Dort wird er im Bereich des Gurtschlosses 5 umgelenkt und zur anderen Seite des Insassen zurückgeführt, wo er am Kraftfahrzeug befestigt ist. Dieser zurückgeführte Abschnitt des Gurtes 12 ist von mehreren Ringen 14 als Führungselemente umfaßt, die entlang einer Kante des Gassacks 6 an diesem befestigt sind. Der gefaltete Gassack 6 ist mit dem zugehörigen Gasgenerator 8 wieder seitlich des Insassen angeordnet.

Nach dem Zünden des Gasgenerators wird der Gassack 6 während der Entfaltung mittels der Ringe 14 auf dem als Führungsbahn dienenden Abschnitt des Gurtes 12 geführt, so daß sich der Gassack nach der vollen Entfaltung, wie es in Fig. 7 dargestellt ist, in der für den Schutz des Insassen erforderlichen Position befindet.

Die Auszugslänge X der Führungsbahn ist abhängig von der körperlichen Konstitution des Insassen und von dessen Bekleidungszustand. Der Gassack 6 weist einen schlauchförmigen Gaseinlaß 6c auf, dessen Länge so bemessen ist, daß er im voll entfalteten Zustand des Gassackes bei maximal ausgezogenem Gurt vollkommen gestreckt ist. Sofern der Gurt bei schlankeren Insassen weniger weit ausgezogen ist, bildet der Gaseinlaß 6c eine Lose 6d, wie es in Fig. 7 dargestellt ist. Infolge dieser unterschiedlichen Strekkung des Gaseinlasses 6c in Abhängigkeit vom Insassen zentriert sich der Gassack bei seiner Entfaltung unabhängig von der Auszugslänge X des Gurtes und damit der Führungsbahn auf dieser selbsttätig. Dadurch stimmt die durch einen Pfeil in der Fig. 7 gekennzeichnete Hauptentfaltungsrichtung annähernd mit der Mittelachse la des Insassen überein. Dadurch wird erreicht, daß der Gassack immer die für den Schutz des Insassen optimale Position einnimmt.

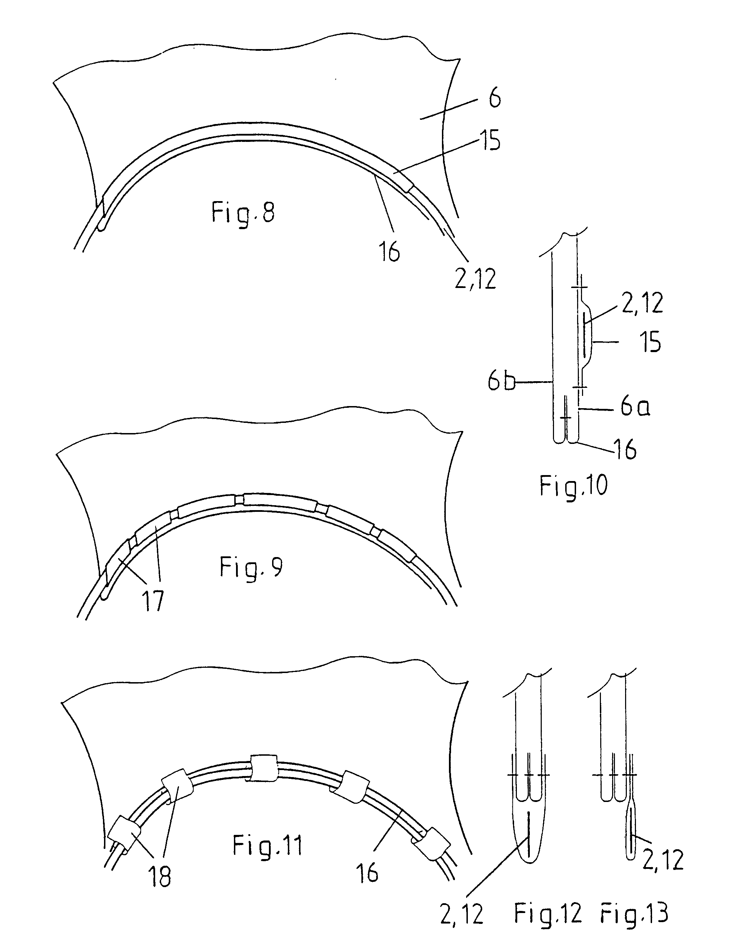

In den Figuren 8 bis 15 sind unterschiedliche Arten der Führungselemente und deren Anbringung am Gassack dargestellt. Beim Ausführungsbeispiel der Fig. 8 ist eine durchgehende Lasche 15 vorgesehen, die sich nahezu über die gesamte Länge einer Gassackkante 16 erstreckt. Wie aus der Fig. 10 ersichtlich ist, ist diese Lasche entlang dieser Kante seitlich auf dem Gassack 6 aufgenäht, wobei die Lasche sowohl auf der Seitenfläche 6a, wie dargestellt, als auch auf der Seitenfläche 6b des Gassacks aufgenäht sein kann.

Beim Ausführungsbeispiel der Fig. 9 sind mehrere einzelne Laschen 17 vorgesehen, die wie die durchgehende Lasche 15 seitlich am Gassack angenäht sind, wie es in Fig. 10 dargestellt ist.

Beim Ausführungsbeispiel der Fig. 11 sind mehrere einzelne Laschen 18 unterhalb der Gassackkante 16 in der Mitte (Fig. 12) oder seitlich (Fig. 13) angeordnet. Die in den Figuren 12 und 13 dargestellte Anbringung kann auch für eine durchgehende Lasche angewendet werden.

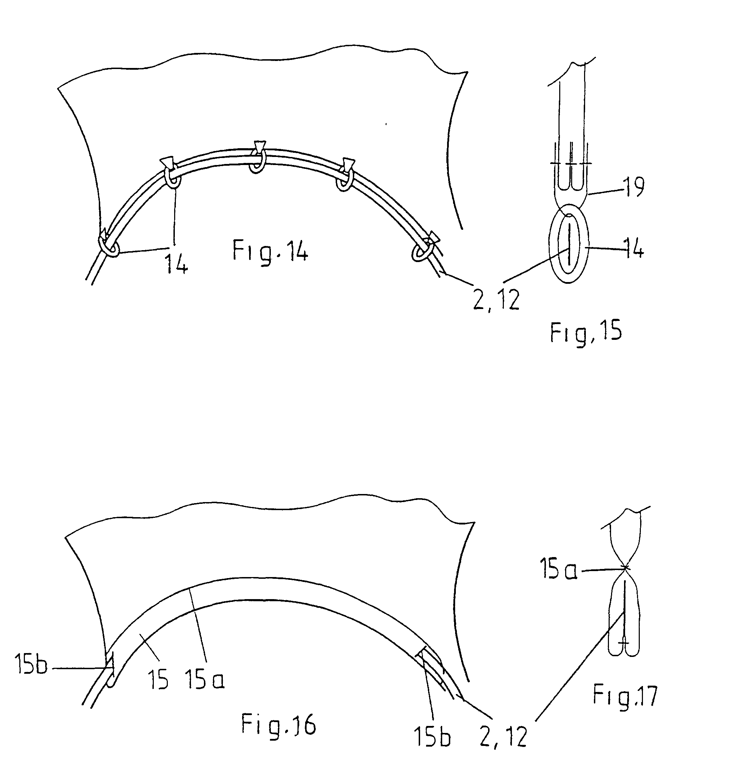

In der Fig. 14 ist nochmals die bereits vorher dargestellte Ausführungsform mit Ringen 14 als Führungselemente und in der Fig. 15 die Anbindung dieser Ringe mittels Verbindungslaschen 19 an den Gassack dargestellt.

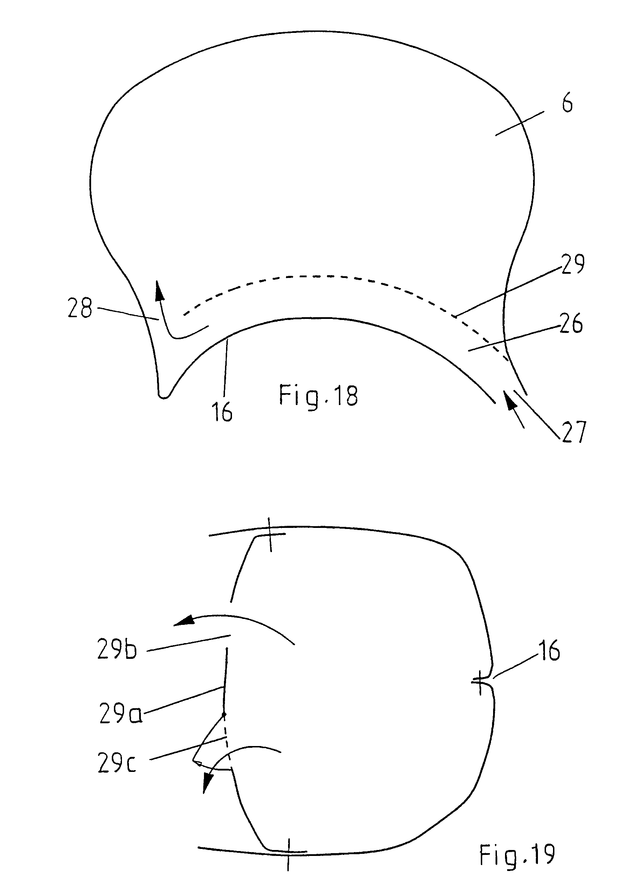

Bei dem in den Figuren 16 und 17 dargestellten Gassack ist als Führungselement eine durchgehende Lasche 15 vorgesehen, die durch einen Abnäher 15a erzielt wird, wobei die Lasche für den Durchtritt der Führungsbahn 2, 12 mit Schlitzen 15b versehen ist.

Bei dem in der Fig. 18 in der Draufsicht dargestellten Gassack verläuft parallel zur Gassackkante 16 eine Naht 29 durch den Gassack 6, wobei sich die Naht nahezu über die gesamte Breite des Gassacks 6 erstreckt. Dadurch ist eine Kammer 26 vorhanden. Nach der Zündung des Gasgenerators tritt das Gas zunächst durch den Gaseinlaß 27 nur in diese Kammer des Gassacks ein, wodurch der Gassack schneller in seine Schutzposition gebracht wird. Das Gas strömt am Ende der Kammer durch einen Gasdurchlaß 28 in den übrigen Bereich des Gassacks. Die Naht 29 kann so dimensioniert sein, daß sie ab einem bestimmten Druck aufreißt, so daß das Gas nach Positionierung des Gassacks schneller in den übrigen Bereich einströmen kann.

Die Fig. 19 zeigt eine weitere Ausführungsform mit einer gesonderten Kammer. In diesem Fall wird die Kammer durch eine annähernd parallel zur Gassackkante 16 eingenähte Zwischenwand 29a gebildet. Die Zwischenwand verläuft entweder nahezu oder durchgehend über die gesamte Gassackbreite. In der Zwischenwand 29a sind ständig offene Gaseinlaßöffnungen 29b oder Öffnungen 29c vorgesehen, die sich erst ab einem vorbestimmten Kammerinnendruck öffnen.

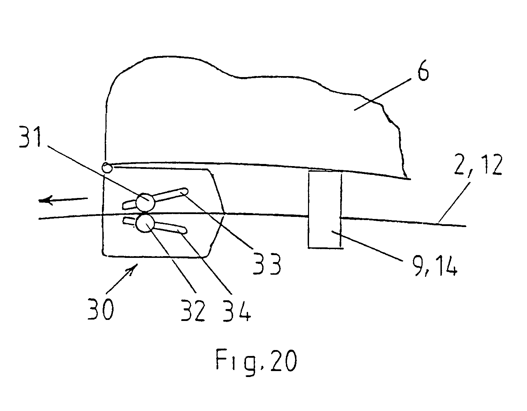

In der Fig. 20 ist eine Rücklaufsperre 30 dargestellt. Diese ist am vorderen Ende des Gassacks 6 befestigt, der in der beschriebenen Weise mittels der Führungselemente 9, 14, 17 oder 18 an einem Gurt 2 bzw. 12 geführt ist. Der Gurt verläuft durch die Rücklaufsperre 30. Diese weist beiderseits des Gurtes zylindrische Klemmstücke 31, 32 auf, die in schräg bezüglich des Gurtes verlaufenden Schlitzen 33, 34 geführt sind. Wenn der Gassack mit der Rücklaufsperre bei Entfaltung des Gassackes in Richtung des Pfeiles bewegt wird, werden die Klemmstücke wegen der schräg verlaufenden Führungsschlitze vom Gurt ferngehalten. Wenn sich der Gassack nach der Entfaltung aber in entgegengesetzter Richtung bewegen sollte, werden die Klemmstücke aufgrund der aufeinanderzu verlaufenden Schlitze gegen den Gurt gedrückt und verhindern damit eine Rückbewegung.

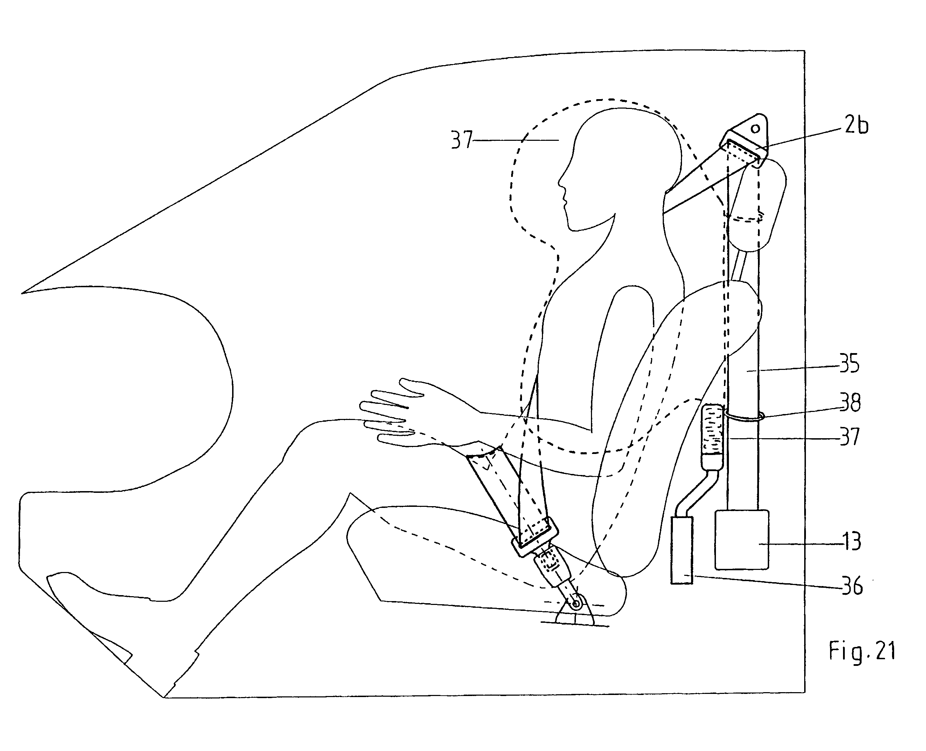

In den bisherigen Ausführungsbeispielen verlief die Führungsbahn im Beckenbereich von einer Seite des Insassen zur anderen Seite. Die erfindungsgemäße Lösung ist aber gleichermaßen auch für eine Führungsbahn im Schulterbereich oder für einen Seitenairbag einsetzbar. So ist in der Fig. 21 eine Anwendung als Seitenairbag dargestellt. Als Führungsbahn wird der sich zwischen dem Gurtautomat 13 und der oberen Umlenkung 2b erstreckende Gurtabschnitt 35 verwendet. Ein Gasgenerator 36 und der gefaltete Gassack 37 mit einem daran befestigten Ring 38 sind im Bereich des Gurtautomaten 13 angeordnet. Nach dem Zünden des Gasgenerators wird der Gassack am Ring 38 nach oben geführt und nimmt nach der Entfaltung zwischen dem Insassen und der Fahrzeugseite die gestrichelt dargestellte Lage ein.

## Patentansprüche

1. Airbagsystem mit Gassack und Gasgenerator, wobei der Gassack entlang einer Führungsbahn entfaltbar ist,
**dadurch gekennzeichnet,**
daß mindestens eine flexible, an einem Ende fest mit dem Kraftfahrzeug verbundene und am anderen Ende lösbar mit dem Kraftfahrzeug verbindbare Führungsbahn (2, 12, 20, 35) vorgesehen ist, wobei der Gassack (6) im inaktivierten Zustand am fest verbundenen Ende der Führungsbahn gelagert ist, und wobei der Gassack nach Zündung des Gasgenerators (8) unter dem Einfluß der in den Gassack (6) eintretenden Gase entlang der Führungsbahn in Richtung des lösbaren Endes bewegbar ist.

2. Airbagsystem nach Anspruch 1, **dadurch gekennzeichnet,** daß mindestens ein an der Führungsbahn (2, 12) zwangsgeführtes Führungselement (9, 14, 15, 17, 18) am Gassack (6) vorgesehen ist.

3. Airbagsystem nach Anspruch 1 oder 2, **dadurch gekennzeichnet,** daß als Führungselement mindestens eine Lasche (15, 17, 18) oder mindestens ein Ring (9, 14) vorgesehen sind.

4. Airbagsystem nach mindestens einem der vorhergehenden Ansprüche, **dadurch gekennzeichnet,** daß bei Verwendung mehrerer Führungselemente diese im Abstand zueinander angeordnet sind.

5. Airbagsystem nach mindestens einem der vorhergehenden Ansprüche, **dadurch gekennzeichnet,** daß der Gassack (6) eine in dessen aufgeblasenem Zustand im wesentlichen parallel zur Führungsbahn verlaufende gesonderte Kammer (26) aufweist, die sich von der Gasgeneratorseite aus über nahezu die gesamte Gassackbreite erstreckt.

6. Airbagsystem nach Anspruch 5, **dadurch gekennzeichnet,** daß die Kammer (26) durch eine Reißnaht (29) oder durch eine eingenähte Zwischenwand (29a) vom übrigen Bereich des Gassacks (6) abgeteilt ist.

7. Airbagsystem nach mindestens einem der vorhergehenden Ansprüche, **dadurch gekennzeichnet,** daß sich die Führungsbahn (2, 12, 20, 25) vor dem Insassen (1) von einer zur anderen Sitzseite erstreckt, daß der Gasgenerator (8) seitlich des Sitzes oder hinter diesem angeordnet ist und daß der Gassack (6) im inaktiviertem Zustand seitlich des Sitzes angeordnet ist und nach Zündung des Gasgenerators (8) in Richtung der anderen Seite des Sitzes bewegbar ist.

8. Airbagsystem nach mindestens einem der vorhergehenden Ansprüche, **dadurch gekennzeichnet,** daß als Führungsbahn ein Gurt (2, 12, 20, 25) vorgesehen ist.

9. Airbagsystem nach Anspruch 8, **dadurch gekennzeichnet,** daß der Gurt als straff am Insassen anliegender Sicherheitsgurt ausgebildet ist.

10. Airbagsystem nach Anspruch 8, **dadurch gekennzeichnet,** daß ein lose am Insassen anliegender Gurt vorgesehen ist.

11. Airbagsystem nach mindestens einem der Ansprüche 8 bis 10, **dadurch gekennzeichnet,** daß der Gurt als Beckengurt (2, 12, 20, 25) ausgebildet ist.

12. Airbagsystem nach mindestens einem der Ansprüche 8 bis 10, **dadurch gekennzeichnet,** daß als Führungsbahn der im Beckenbereich verlaufende Abschnitt (12b) eines 3-Punkt-Automatikgurtes vorgesehen ist.

13. Airbagsystem nach mindestens einem der Ansprüche 8 bis 12, **dadurch gekennzeichnet,** daß der im Beckenbereich verlaufende Gurt oder Gurtabschnitt zweilagig ausgeführt ist, wobei nur die zweite, an der ersten Lage (12a) befestigte Lage (12b) als Führungsbahn für den sich entfaltenden Gassack (6) vorgesehen ist.

14. Airbagsystem nach mindestens einem der Ansprüche 8 bis 13, **dadurch gekennzeichnet,** daß der Gurt (12) von der Seite, an der der Gassack (6) mit dem Gasgenerator (8) vorgesehen ist, aus einem Gurtautomaten (13) heraus zur gegenüberliegenden Seite des Insassen verläuft, dort in einer mit einem Gurtschloß (5) versehenen Führung beweglich geführt und umgelenkt wird und zur anderen Seite zu einer Gurtbefestigung im Bereich des Gasgenerators (8) zurückverläuft.

15. Airbagsystem nach mindestens einem der vorhergehenden Ansprüche, **dadurch gekennzeichnet,** daß am Gassack (6, 38) eine mit der Führungsbahn zusammenwirkende Rücklaufsperre (30) vorgesehen ist.

16. Airbagsystem nach Anspruch 15, **dadurch gekennzeichnet,** daß die Rücklaufsperre (30) zwei in Führungen (33, 34) beweglich gelagerte zylindrische Klemmstücke (31, 32) aufweist, die sich auf unterschiedlichen Seiten der Führungsbahn (35) gegenüberliegen.

17. Airbagsystem nach mindestens einem der vorhergehenden Ansprüche, **dadurch gekennzeichnet,** daß sich die Führungsbahn (35) seitlich hinter dem Insassen vom Fußraum zum Kopfraum erstreckt.

18. Airbagsystem nach Anspruch 17, **dadurch gekennzeichnet,** daß der Gasgenerator (36) und der inaktivierte Gassack (37) im Fußraum angeordnet sind.

19. Airbagsystem nach Anspruch 17 oder 18, **dadurch gekennzeichnet,** daß als Führungsbahn der zwischen dem Gurtautomat (13) und der oberen Umlenkung (2b) verlaufende Abschnitt (35) eines 3-Punkt-Automatikgurtes vorgesehen ist.

20. Airbagsystem nach mindestens einem der Ansprüche 8 bis 19, **dadurch gekennzeichnet,** daß der Gassack (6) einen schlauchförmigen Gaseinlaß (6c) aufweist, dessen Länge so bemessen ist, daß er im voll entfalteten Zustand des Gassackes bei maximal ausgezogenem Gurt vollkommen gestreckt ist und bei weniger ausgezogenem Gurt eine Lose (6d) bildet.

## Claims

1. Airbag system with gas bag and gas generator wherein the gas bag can be unfolded along a guideway
**characterised in that**
at least one flexible guide track (2, 12, 20, 35) is provided which at one end is fixed to the motor vehicle and at the other end is detachably connectable to the motor vehicle, wherein the gas bag (6) is mounted in the inactivated state on the fixed end of the guide track, and wherein the gas bag after firing of the gas generator (8) can be moved along the guide track in the direction of the detachable end under the influence of the gases entering into the gas bag (6).

2. Airbag system according to claim 1, **characterised in that** at least one guide element (9, 14, 15, 17, 18) is provided on the gas bag (6) and is automatically guided on the guide track (2,12).

3. , Airbag system according to claim 1 or 2 **characterised in that** at least one strap (15, 17, 18) or at least one ring (9, 14) is provided as the guide element.

4. Airbag system according to at least one of the preceding claims **characterised in that** when using several guide elements these are mounted at a distance from each other.

5. Airbag system according to at least one of the preceding claims characterised, in that the gas bag (6) has a separate chamber (26) which in its inflated state runs substantially parallel to the guide track and which extends from the side of the gas generator out over practically the entire width of the gas bag.

6. Airbag system according to claim 5 **characterised in that** the chamber (26) is divided from the remaining area of the gas bag (6) by a rip seam (29) or by a sewn-in intermediate wall (29a).

7. Airbag system according to at least one of the preceding claims **characterised in that** the guide track (2, 12, 20, 35) extends in front of the occupant (1) from one side of the seat to the other, that the gas generator (8) is mounted at the side of the seat or behind same and that the gas bag (6) is mounted in the inactivated state at the side of the seat and after firing the gas generator (8) can be moved in the direction of the other side of the seat.

8. Airbag system according to at least one of the preceding claims **characterised in that** a belt (2, 12, 20, 25) is provided as the guide track.

9. Airbag system according to claim 8 **characterised in that** the belt is formed as a seat belt which lies taut against the occupant.

10. Airbag system according to claim 8 **characterised in that** a belt is provided which lies loose against the occupant.

11. Airbag system according to at least one of claims 8 to 10 **characterised in that** the belt is formed as a lap belt (2, 12, 20, 25).

12. Airbag system according to at least one of claims 8 to 10 **characterised in that** the section (12b) of a 3-point automatic belt running in the lap area is provided as the guide track.

13. Airbag system according to at least one of claims 8 to 12 **characterised in that** the belt or belt section running in the lap area is formed in two layers wherein only the second layer (12b) fixed on the first layer (12a) is provided as a guide track for the unfolding gas bag (6).

14. Airbag system according to at least one of claims 8 to 13 **characterised in that** the belt (12) runs from the side on which the gas bag (6) is provided with the gas generator (8), from an automatic belt mechanism (13) to the opposite side of the occupant, is deflected and movably guided there in a guide provided with a belt lock (5) and runs back to the other side to a belt fastening in the area of the gas generator (8).

15. Airbag system according to at least one of the preceding claims **characterised in that** a non-return fitting (30) interacting with the guide track is provided on the gas bag (6, 38).

16. Airbag system according to claim 15 **characterised in that** the non-return fitting (30) has two cylindrical clamping members (31, 32) movably mounted in guides (33,34) and set opposite one another on different sides of the guide track (35).

17. Airbag system according to at least one of the preceding claims **characterised in that** the guide track (35) extends at the side behind the occupant from the floor area to the head area.

18. Airbag system according to claim 17 **characterised in that** the gas generator (36) and the inactivated gas bag (37) are mounted in the floor area.

19. Airbag system according to claim 17 or 18 **characterised in that** the section (35) of a 3-point automatic belt running between the automatic belt mechanism (13) and the upper deflection point (2b) is provided as the guide track.

20. Airbag system according to at least one of claims 8 to 19 **characterised in that** the gas bag (6) has a tubular gas inlet (6c) whose length is dimensioned so that in the fully unfolded state of the gas bag it is completely stretched when the belt is at maximum extension and is slack (6d) when the belt is less extended.

## Revendications

1. Système d'airbag comportant un coussin à gaz et un générateur de gaz, le coussin à gaz pouvant être déplié le long d'une voie de guidage, **caractérisé en ce qu**'il est prévu au moins une voie de guidage flexible (2, 12, 20, 35) reliée fermement au véhicule automobile par une extrémité et reliée de façon détachable au véhicule automobile par l'autre extrémité, le coussin à gaz (6) étant, dans l'état inactivé, monté à l'extrémité fixe de la voie de guidage, et après, allumage du générateur de gaz. (8), le coussin à gaz étant mobile le long de la voie de guidage en direction de l'extrémité détachable sous l'influence des gaz rentrant dans le coussin à gaz (6).

2. Système d'airbag selon la revendication 1, **caractérisé en ce qu**'il est prévu au moins un élément de guidage (9, 14, 15, 17, 18) sur le coussin à gaz (6) et guidé de façon forcée sur la voie de guidage (2, 12).

3. Système d'airbag selon l'une ou l'autre des revendications 1 et 2, **caractérisé en ce qu**'au moins une patte (15, 17, 18) ou au moins une bague (9, 14) est prévue en tant qu'élément de guidage.

4. Système d'airbag selon l'une quelconque au moins des revendications précédentes, **caractérisé en ce que** lors de l'utilisation de plusieurs éléments de guidage, ceux-ci sont agencés à distance les uns des autres.

5. Système d'airbag selon l'une quelconque au moins des revendications précédentes, **caractérisé en ce que** le coussin à gaz (6) comprend une chambre séparée (26) s'étendant, dans son état gonflé, sensiblement parallèlement à la voie de guidage, laquelle chambre s'étend pratiquement sur toute la largeur du coussin à gaz depuis le côté générateur de gaz.

6. Système d'airbag selon la revendication 5, **caractérisé en ce que** la chambre (26) est séparée de la zone restante du coussin à gaz (6) par un ligne déchirable (29) ou par une paroi intermédiaire cousue (29a).

7. Système d'airbag selon l'une quelconque au moins des revendications précédentes, **caractérisé en ce que** la voie de guidage (2, 12, 20, 35) s'étend devant le passager (1) depuis un côté de siège à l'autre, en ce que le générateur de gaz (8) est agencé latéralement à côté du siège ou derrière celui-ci, et en ce que le coussin à gaz (6) est agencé, dans l'état inactivé, latéralement à côté du siège et est mobile en direction de l'autre côté du siège après allumage du générateur de gaz (8).

8. Système d'airbag selon l'une quelconque au moins des revendications précédentes, **caractérisé en ce qu**'une sangle (2, 12, 20, 35) est prévue en tant que voie de guidage.

9. Système d'airbag selon la revendication 8, **caractérisé en ce que** la sangle est réalisée sous forme d'une ceinture de sécurité appliquée de façon tendue contre le passager.

10. Système d'airbag selon la revendication 8, **caractérisé en ce qu**'il est prévu une sangle appliquée de façon lâche contre le passager.

11. Système d'airbag selon l'une quelconque au moins des revendications 8 à 10, **caractérisé en ce que** la sangle est réalisée sous forme de ceinture ventrale (2, 12, 20, 35).

12. Système d'airbag selon l'une quelconque au moins des revendications 8 à 10, **caractérisé en ce qu**'il est prévu en tant que voie de guidage le tronçon d'une ceinture automatique à trois points (12b), lequel s'étend dans la zone ventrale.

13. Système d'airbag selon l'une quelconque au moins des revendications 8 à 12, **caractérisé en ce que** la ceinture ou le tronçon de ceinture s'étendant dans la zone ventrale est réalisé(e) en deux couches, seule la seconde couche (12b) fixée sur la première couche (12) étant prévue en tant que voie de guidage pour le coussin à gaz (6) en cours de dépliage.

14. Système d'airbag selon l'une quelconque au moins des revendications 8 à 13, **caractérisé en ce que**, depuis le côté sur lequel est prévu le coussin à gaz (6) avec le générateur de gaz (8), la ceinture (12) s'étend hors d'un mécanisme de ceinture automatique (13) jusqu'au côté opposé du passager, y est guidée en déplacement et renvoyée dans un guidage pourvu d'une serrure de ceinture (5) et retourne vers l'autre côté jusqu'à une fixation de ceinture dans la zone du générateur de gaz (8).

15. Système d'airbag selon l'une quelconque au moins des revendications précédentes, **caractérisé en ce qu**'il est prévu sur le coussin à gaz (6, 38) un blocage anti-retour (30) coopérant avec la voie de guidage.

16. Système d'airbag selon la revendication 15, **caractérisé en ce que** le blocage anti-retour (30) comprend deux pièces de coincement cylindriques (31, 32) montées mobiles dans des guidages (33, 34), qui se trouvent en vis-à-vis l'une de l'autre sur des côtés différents de la voie de guidage (35).

17. Système d'airbag selon l'une quelconque au moins des revendications précédentes, **caractérisé en ce que** la voie de guidage (35) s'étend latéralement derrière le passager depuis la zone des pieds jusqu'à la zone de tête.

18. Système d'airbag selon la revendication 17, **caractérisé en ce que** le générateur de gaz (36) et le coussin à gaz inactivé (37) sont agencés dans la zone des pieds.

19. Système d'airbag selon l'une ou l'autre des revendications 17 et 18, **caractérisé en ce qu**'il est prévu en tant que voie de guidage le tronçon (35) d'une ceinture automatique à trois points, lequel s'étend entre le mécanisme de ceinture automatique (13) et le renvoi supérieur (2b).

20. Système d'airbag selon l'une quelconque au moins des revendications 8 à 19, **caractérisé en ce que** le coussin à gaz (6) comprend une admission de gaz (6c) en forme de tuyau dont la longueur est ainsi dimensionnée qu'il est complètement étiré dans l'état entièrement déplié du coussin à gaz et tandis que la ceinture est étirée au maximum, et qu'il forme une partie lâche (6d) lorsque la ceinture est moins étirée.
